**Europäisches Patentamt**

(19) **European Patent Office**

**Office européen des brevets**

(11) Publication number: **0 052 711**

**B1**

(12) **EUROPEAN PATENT SPECIFICATION**

(45) Date of publication of patent specification: **10.12.86**

(51) Int. Cl.⁴: **G 06 F 15/20**

(21) Application number: **81107581.1**

(22) Date of filing: **23.09.81**

(54) Method of processing text by insertion of a block of text in a text processing system.

(30) Priority: **20.11.80 US 208788**
**20.11.80 US 208784**

(43) Date of publication of application:
**02.06.82 Bulletin 82/22**

(45) Publication of the grant of the patent:
**10.12.86 Bulletin 86/50**

(84) Designated Contracting States:
**DE FR GB IT**

(56) References cited:
**GB-A-1 537 429**
**GB-A-2 016 188**
**US-A-4 051 459**
**US-A-4 205 922**

(73) Proprietor: **International Business Machines
Corporation
Old Orchard Road
Armonk, N.Y. 10504 (US)**

(72) Inventor: **Aiken, John Andrew, Jr.
805 Bluff Drive
Round Rock Texas 78664 (US)**
Inventor: **Shipp, Kenneth, Osborn, Jr.
1108 Gemini Drive
Austin Texas 78758 (US)**

(74) Representative: **Bonneau, Gérard
Compagnie IBM France
Département de Propriété Intellectuelle
F-06610 La Gaude (FR)**

Courier Press, Leamington Spa, England.

## Description

This invention relates to the correction of keyboard input text as stored for display or hard copy printing, and more particularly to a method of processing text by insertion of a block of text in a text processing system.

In text processing systems such as IBM Office System 6 an 8-bit extension of the 7-bit magnetic card code is utilized wherein a keyboard number for a document is saved in a document master format and is made operator-selectable. For multi-line portions of the document, where another keyboard set is required, provision is made for a change of the keyboard and a format change. One problem with the system 6 is that an operator has to either find and inspect the prior format or has to remember the identification of the active input keyboard in order to know what key to press for inclusion in the text of a given desired graphic. Besides, the active keyboard of the system can be inadvertently changed, merely by scrolling past a format change.

Further, if the operator changes the keyboard specified in the master format or in a format change, the printed/displayed text also changes, since the internal code points are not retranslated. The same result takes place if a block of text is moved to a section of the document keyed under a different format.

A way of facilitating the change of the character set is described in US patent 4 205 922 which relates to a system for handling multiple printer font requirements during playout of a plurality of sequentially stored text columns. During playout within a column or from column to column, printer font requirements stored with the text are used to change the printer font. A comparison is made between the last printer font identification code detected in a buffer storing font identification codes keyed during the input keying setup for later playout, and the font identification code stored in a font change control which contains the font identifications code currently used. If there is a difference the system alerts the operator to effect a physical printer font change.

The object of the present invention is to further facilitate the correction of texts that have been input by way of keyboard to storage preparatory to hard copy printout or other display.

The present invention relates to a method of processing text by introducing a selected block of text in a text processing system using different keyboard character sets and comprising a display unit for displaying a text stream to an operator, a keyboard means for entering characters, a processor, and a memory means including a text storage buffer for storing the text data stream and control data, an active document format section for storing the active document character set code and a cursor control section for controlling a cursor on the display unit. The method comprises the steps of identifying, in response to the operator command positioning said cursor on said display, the selected block of text to be inserted into said text stream at a selected location, fetching from said active document format section the keyboard character set code for the text in said text stream immediately preceding said location, and from a character set storage means the keyboard character set code identifying the character set of the block of text to be inserted, comparing the keyboard character set code for the preceding text with the character set code of the selected block of text to be inserted, altering in said text storage buffer said text stream by inserting said selected block of selected text, and inserting character set change codes in the altered text stream when the comparison indicates character set mismatch.

The foregoing objects, features, and advantages of the invention will become more apparent from the following, more particular description of a preferred embodiment, as illustrated in the accompanying drawings wherein:

Figure 1 is a block diagram of the system embodying the present invention.

Figure 2 is a block diagram of the processor shown in Figure 1.

Figure 3 is a flow diagram indicating the sequence of operations in the system of Figure 1.

Figure 4 illustrates a series of steps involved in the operations depicted in Figure 2.

Figures 5 and 6 are flow diagrams showing the operational steps of the present invention in both cases of insertion and deletion of a block of text.

Figures 7A—E, 8A—E, 9A—E, 10A—E, 11A—E and 12A—D illustrate examples of the insertion/deletion of a block of text in a text stream with various combinations of keyboard character sets for the inserted/deleted text and the stored text stream.

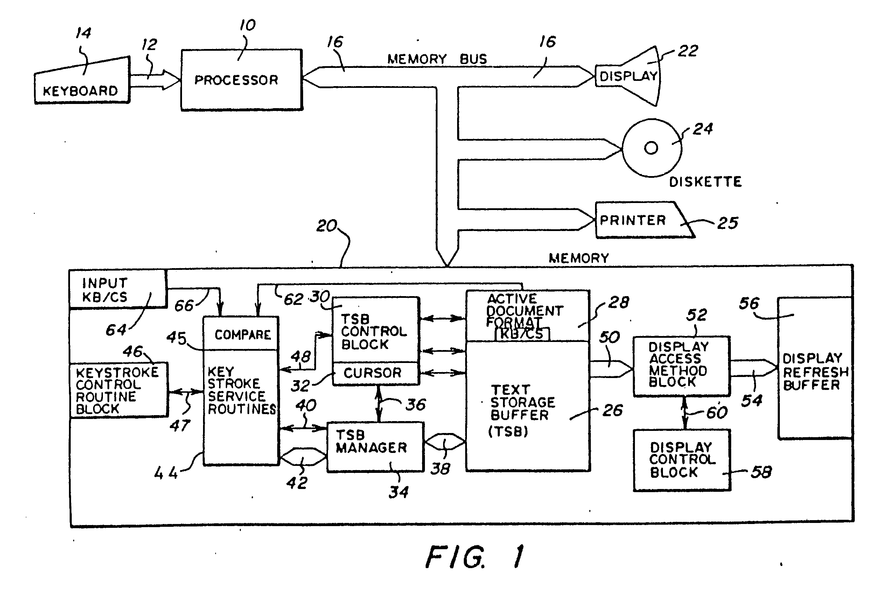

Referring now to Figure 1, a portion of the text processing system is shown, including a processor 10 to which is connected a bus 12 leading from a keyboard 14. Character data generated by manual actuation of keyboard 14 applies character-related signals to processor 10 which provides on an output memory bus 16 a data stream in which the characters selected by actuation of keyboard 14 appear suitably encoded.

Memory bus 16 extends to a memory unit 20, to a display unit 22, to a diskette unit 24 and to a printer 25.

Memory 20 includes a text storage buffer 26 which serves to store the coded data stream comprising the text input through the keyboard 14. Included in the text storage buffer 26 is a storage section for the identity of the active document format which contains the active document keyboard character set namely, in portion 28.

A text storage buffer control block 30 is linked to buffer 26 and includes a cursor control section 32.

A text storage buffer manager 34 is linked by channel 36 to the control block 30, by channels 38, to the buffer 26 and by channels 40 and 42 to a keystroke service routine section 44 which includes a compare section 45.

A keystroke control routine block 46 is provided for the keystroke service routine section 44 to select the appropriate routine for the entered keystroke. The control block 30 is connected to section 44 by channel 48. Buffer 26 is coupled by channel 50 to a display access method block 52 which is coupled by way of channel 54 to a display refresh buffer 56. A display control block 58 is coupled by channel 60 to the display access method block 52.

In accordance with the present invention, a channel 62 is connected from the active document format storage 28 of buffer 26 to the compare section 45. Further, an input keyboard character set (KB/CS) block 64 stores the identity of any desired input keyboard character set of keyboard 14 and is connected by way of channel 66 to the compare section 45.

The display access method block has corresponding access method blocks for the diskette 24 and printer 25. Each of the blocks serves as an interface to the corresponding unit.

The display refresh buffer 56 contains the actual text which is shown on display 22 while the buffer 26 contains all of the display text plus control data.

In operation of the system of Figure 1, the encoded data stream on memory bus 16 is stored in the text storage buffer 26. In the process of correction and editing the contents of the text storage buffer 26, selected portions of a line or a page are presented on display unit 22. Stored in active document format section 28 is the code designating the keyboard character set that was employed in the production of the coded data stream appearing on memory bus 16 leading from processor 10 and applied from text storage buffer 26 to display unit 22 for edit.

If it is necessary, for example, to insert a graphic item or a block of text into the text displayed on unit 22, then the present invention is employed. A cursor, conventionally available on such display systems, is placed below the character on display 22 at the location immediately following the location where an insert is to be made. The input keyboard character set identification of which the graphic item to be inserted forms a part, is applied by way of channel 66 to the compare section 45 which then causes a comparison between the identification of the input keyboard character set stored in block 64 and the active document format keyboard character set in storage 28.

If, as a result of the comparison, it is found that the keyboard character sets are the same, then the desired insert graphics are input through keyboard 14. The insert will appear at the selected location without the need for inserted character set change codes.

If, as a result of the comparison, it is found that the input keyboard character set stored by block 64 differs from the active document format keyboard character set in storage 28, then the character set change code for the input keyboard character set is inserted into the data stream immediately ahead of the location of the cursor and a second character set change code is inserted in the data stream following the first code, the second code designating the active document format keyboard character set as stored in storage 28. The graphics desired are then inserted between the character set change codes.

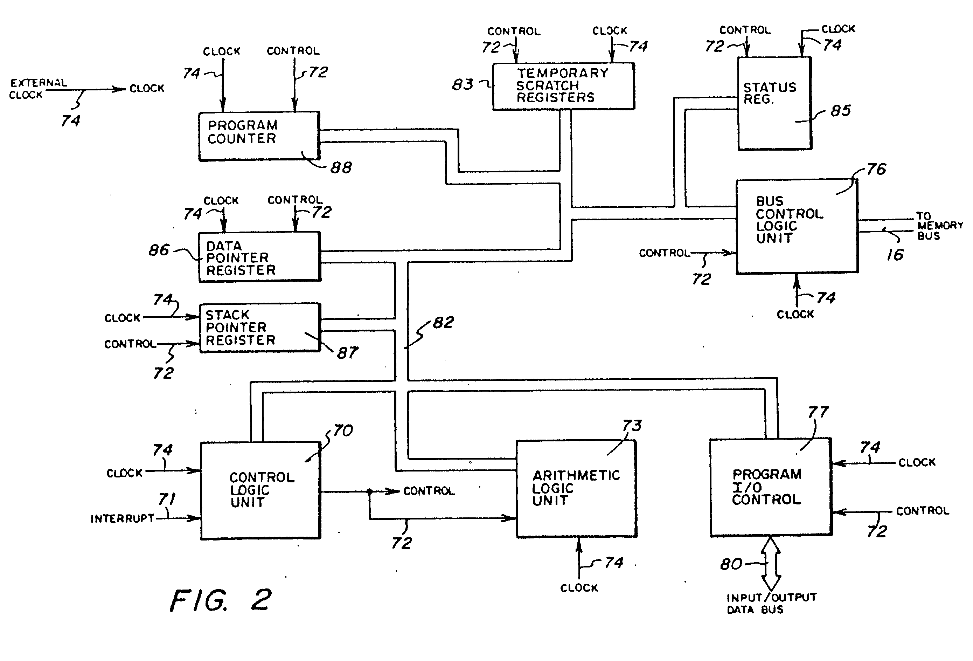

Referring to Figure 2, the processor 10 is further detailed to show typical logic hardware elements as found in such processors. The processor may be a commercially available unit, such as from Intel Corporation and identified by the number 8086. Typically the processor includes a control logic unit 70 which responds to interrupts on a device bus 71 from the keyboard 14. The control logic unit 70 is also connected to a data and address bus 82 interconnected to various other logic units of the processor.

In response to a fetch instruction from the random access memory 20, the control logic unit 70 generates control signals to other logic elements of the processor. These control signals are interconnected to the various elements by means of a control line 72 which is illustrated directly connected to an arithmetic logic unit 73 and identified as a "control" line 72 to other elements of the processor. Sequence operation of a control unit 70 with other logic elements of the processor 10 is achieved by means of clock pulses input to the processor from an external clock source on a clock line 74. Line 74 is also shown interconnected to other logic elements of the processor 10 detailed in Figure 2.

Data and instructions to be processed in the processor 10 are input through a bus control logic unit 76. Data to be processed may also come from program input/output control logic unit 77. The bus control logic 76 connects storage elements of the random access memory 20 and receives instructions for processing data received from the input/output control 77 or received from the random access memory 20. Thus, the input/output control 77 receives data from the keyboard 14 or the random access memory 20 while the bus control logic 74 receives instructions and/or data from the same memory. Note that different storage sections of the random access memory 20 are identifiable for instruction storage and data storage.

Device control information from the processor 10 is output through the program input/output controller 77 over a data bus 80. Input data on the data bus 80 from the keyboard 14 is processed internally through the processor by instructions on the bus 82 to temporary scratch registers 83. The arithmetic logic unit 73, in response to a control signal on line 72 and in accordance with instructions received on an input/output data bus 80, performs computations and the results can be stored in the temporary scratch registers 83. Various other transfers of data between the arithmetic logic unit 73 and other logic elements of the processor are of course possible. Such additional transfers may be to a status register 85, data pointer register 86 or a stack pointer register 87. A program counter 88 is also connected through the data stream bus 82 to various other logic elements in the processor 10.

A particular operating sequence for the processor 10 is determined by instructions and data on the memory bus 16 and input data on the bidirectional bus 80. As an example, in response to received instructions, the processor 10 transfers data stored in the scratch registers 83 to one of the registers 85, 86 or 87. Such operations of processors as detailed in Figure 2 are considered to be well known and understood by one of ordinary skill in data processing field. A detailed description of each operation of the processor in Figure 2 is not deemed necessary for a full understanding of the present invention as claimed.

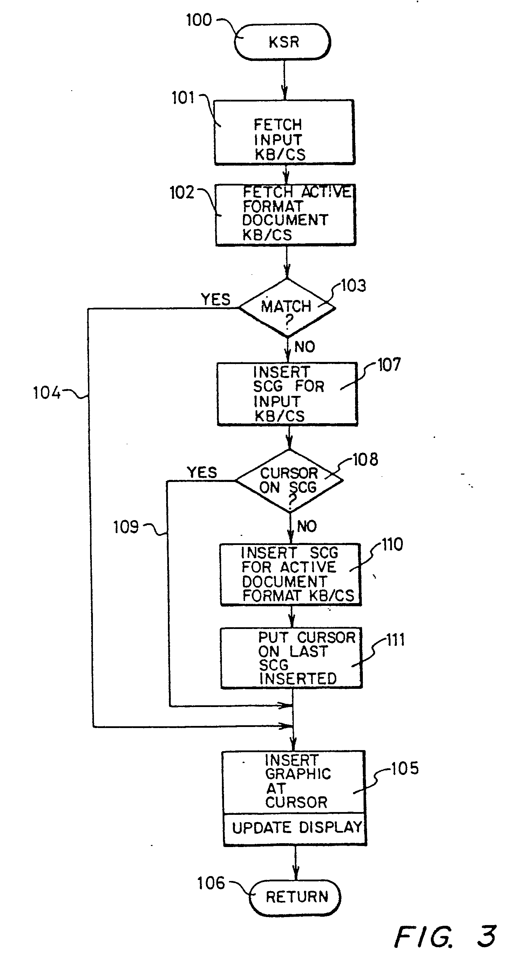

In Figure 3, a flow chart illustrates the steps followed in the compare section 45 and keystroke service routine (KSR) section 44 of Figure 1 for graphic insertion operations.

The keystroke service routine desired for graphic insertion utilizes service routines stored in the text storage buffer manager 34. The KSR routine 100 involves a first step 101 in which the code for the input keyboard character set is fetched from storage block 64. Next, the active document format keyboard character set is fetched from storage block 28 in step 102. The two sets are then compared in step 103. If they are the same, then, as indicated by a first output link 104, the graphic character is merely inserted ahead of the cursor location as indicated in step 105. This updates the display, following which the system returns to the start condition, as indicated by step 106.

If, in the comparison step 103, it is found that the input keyboard character set and the active document format character set differ, then a second output link is taken to step 107 where a character set code (SCG) is inserted in the data stream for the input keyboard character set. Next, a check is made to see if the cursor is at the location in the data stream at which the active document format keyboard character set change code had previously been inserted as indicated by step 108. If the cursor is at that code location, then the graphic is inserted as indicated by link 109.

If a comparison in step 108 is negative, then a code for active document format keyboard character set is inserted after the code previously inserted for the input keyboard character set as indicated in step 110. The cursor is then placed on the last inserted keyboard character set change code SCG, namely, the active document keyboard format character set as indicated in step 111. Thereupon, the desired graphics are inserted, as indicated in step 105, to update the display. The system is then returned to its normal state.

As the process described in reference to Figure 3 is repeated there may be the occurrence of contiguous character set change codes in the text stream. Should this occur, the upstream character set change codes are deleted leaving the last downstream code.

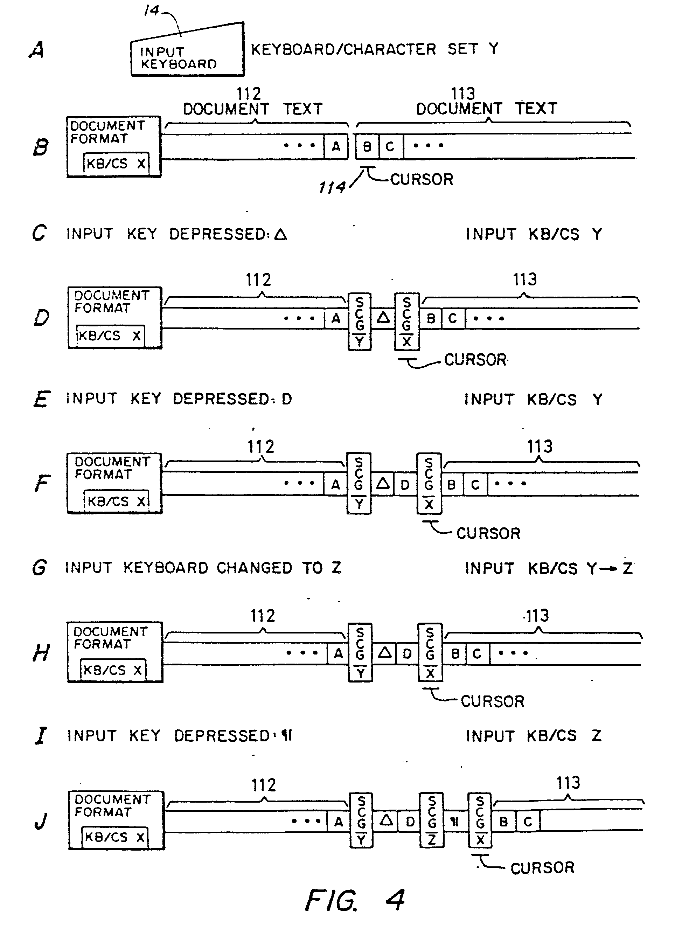

The system and examples of its operations are further illustrated by the steps depicted in Figure 4A—J. Step 4A indicates that the input keyboard 14 is to be used to insert a graphic character based upon a keyboard character set Y.

Step 4B illustrates a portion of the data stream that has been input in the document format keyboard character set X. The insert location in the data stream appearing on display 22 is at a point between the characters A and B, between the document text segments 112 and 113. Preparatory to such insertion, the cursor 114 is manipulated by the operator to a location under the character B. In step 4C the operator depresses an input key for a graphic symbol, for example, $\triangle$, which is one of the symbols in set Y and not in set X.

Step 4D indicates that the symbol $\triangle$ has been inserted into the data stream between the SCG code for the keyboard character set Y and the SCG code for the keyboard character set X. In step 4E, manual depression of, for example, the key D in the input keyboard character set Y results in step 4F, wherein the symbol D is inserted into the document stream after the symbol $\triangle$.

It will be noted that the data stream 113 is shifted from one step to the right from the locations in step 4B to the locations in steps 4D and 4F. That is, the codes and desired graphics are inserted into the stream and the rest of the stream is shifted downward.

Step 4G indicates that the input keyboard is changed to keyboard set Z.

As indicated in step 4H, no codes are inserted into the data stream at this point since no graphic is inserted when changing the input keyboard character set from Y to Z.

However, as indicated in step 4I, if the input key is depressed to insert, for example, ¶, as found only in keyboard character set Z, then, as indicated in step 4J, the symbol ¶ is inserted into the data stream, along with the code for the keyboard character set Z immediately preceding the symbol ¶. Again, the cursor is shifted downstream, along with the rest of the data stream two more symbol slots to accommodate the keyboard character set SCG code Z and the desired graphic symbol ¶. Note that another SCG code was not inserted after the symbol ¶ since the cursor was already on an SCG code.

When the keyboard character set change code is encountered and one of the following characters is not on the print head during a print operation, the printer is stopped and the operator is alerted to change the print head for the new character set. The operator must make such a change whenever there is a character in the data storage set not included on the installated print head.

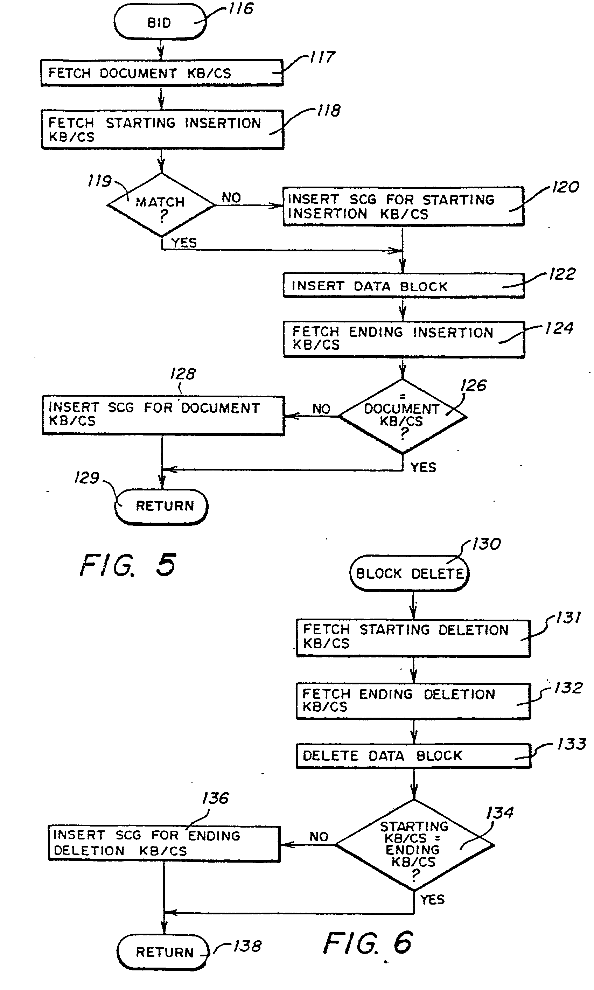

The flow diagram shown in Figure 5 illustrates another way to implement the logical operation of the invention. The procedure is started with the block insert data (BID) service routine step 116. In step 117 the keyboard character set for the document in process is determined. This is the keyboard character set for the preceding text immediately before a location designated by the operator for inserting a block of text material with the operator specifying a block of text to be inserted via the keyboard 12 and display 20. It must be noted that a block of text designates a single character as well as a complete text.

In step 118 the keyboard character set is determined for the starting text of an insertion of text material which will be entered into the document being processed. The keyboard character set for the text preceding the point of insertion in the document and the starting text in the inset are compared in step 119. If the character sets do not match a character set change code (SCG) is inserted between the preceding text of the document and the starting text of the insert. The SCG indicates the keyboard character set for the starting text of the insert.

After insertion of the SCG the data block of text is inserted in step 122.

After the data block is inserted, the keyboard character set at the end of the inserted data block is determined at step 124. In step 126 the keyboard character set for the following text of the document is compared for the keyboard character set for the ending text of the insert. If these two character sets do not compare, another SCG is inserted in the text stream as indicated in step 128. The SCG for the following text of the document is inserted after the insert and before the beginning of the following text. After insertion of this SCG into the text stream the process is returned through step 129 to the start at step 116.

Returning to step 119, if the keyboard character sets for the preceding text of the document and the starting text of the insert match then there is no need for the insertion of an SCG and step 120 is skipped with the operation proceeding directly from step 119 to step 122.

Returning to step 126, if the keyboard character set for the ending text of the insert corresponds to the keyboard character set for the following text of the document then there is no need for an insert and step 128 is skipped and the process proceeds directly from step 126 to step 129.

Now referring to Figure 6, the deletion procedure is started with step 130 with the operator specifying a block of text to be deleted via the keyboard 12 and display 20. In step 131 the keyboard character set for the text preceding the start of the data block to be deleted is determined. In step 132 the keyboard character set for the text following the end of the data block to be deleted is determined. Once these keyboard character sets have been determined the data block is deleted in step 133.

In step 134 the two keyboard character sets at the start and at the end of the data block are compared. If these two character sets do not compare then a character set change code (SCG) for the text following the deleted data block is inserted immediately preceding the text following the deleted data block. After insertion of the SCG into the text stream at step 136 the process is returned through step 138 to the start at step 130.

Returning to step 134 if the two character sets match then there is no need for the insertion of an SCG and step 136 is skipped with the operation proceeding directly from step 134 to step 138.

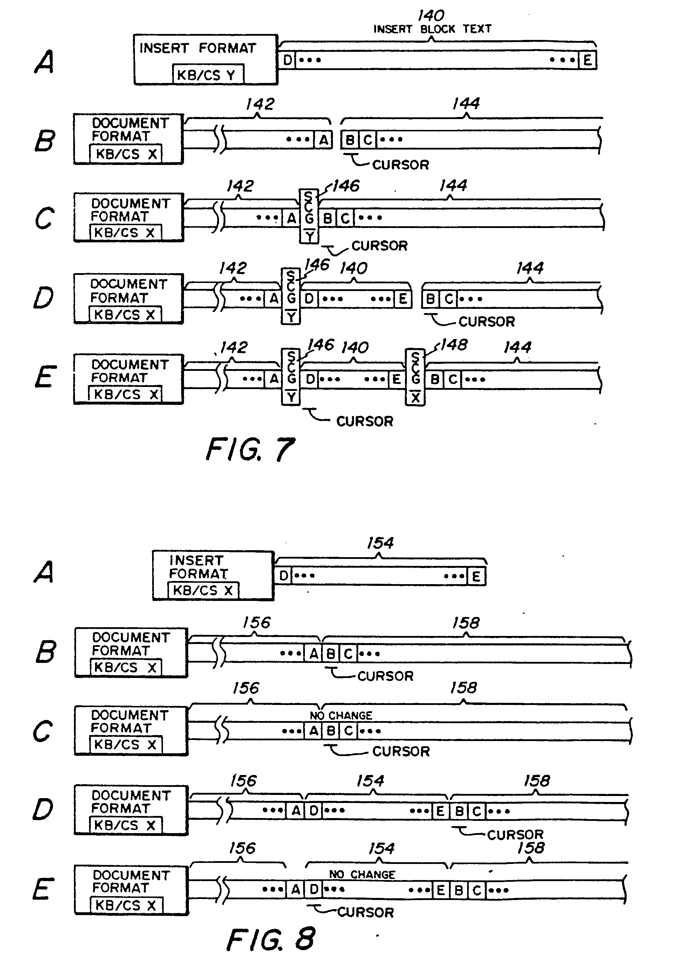

Examples of the procedure of the present invention are illustrated in Figures 7—11. Referring now to Figure 7, an insert block text 140 has a keyboard character set of "Y". As shown in Figure 7B a cursor is set below character B to indicate that the operator has chosen a location between characters A and B for insertion of block text 140 between document texts 142 and 144. However, the active document keyboard character set for the document in progress is "X".

Referring to Figure 7C, since the insert text 140 has a different keyboard character set from that of the document, a character set change code must be inserted. This is shown as the character set change code SCGY 146. Note that it is inserted at the end of the preceding text 142 of the document.

Referring now to Figure 7D, the insert block text 140 is inserted into the character stream following the SCGY 146. Since the insert has the Y character set and the document had the X character set a character set change code SCGX 148 must be inserted at the end of the insert and before the beginning of the following text of the document.

In Figures 8A—8E there is illustrated the case where the insert has the same keyboard character set as the document. The insert 154 is to be added in the document text 156, 158 between the characters A and B as indicated by the cursor at character B. Since the character sets are the same, there is no need to insert a character set change code. The insert text 154 is added to the data stream between document texts 156 and 158. Note that further there is no need to add a character set change code at the transition from the ending text of the insert to the following text of the document.

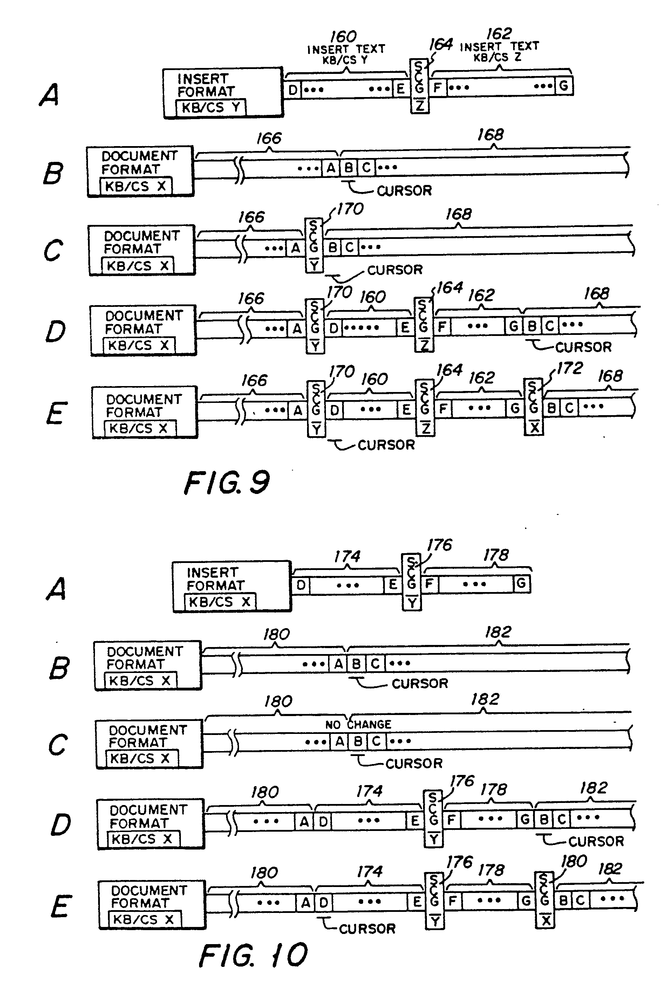

A further example is illustrated in Figures 9A—9E. The insert comprises a starting text section 160 and an ending text section 162. The starting text section has a keyboard character set of Y and the ending text section has a keyboard character set change code of Z. A character change code 164 changes the character set from Y to Z. The document text is shown as text sections 166 and 168. As indicated by the cursor under the character B the insert is to be placed between the characters A and B.

Referring to Figure 9C, a character set change code 170 for the character set Y is inserted after the preceding text section 166 since that text section is in character set X and the starting text of the insert is in character set Y. In Figure 9D, the insert sections 160, 162 and 164 are entered into the document text stream between the characters A and B. Referring to Figure 9E, an SCG 172 is inserted between the ending text section 162 and the following text section 168 change to the X character set.

A further example of the method of the present invention is illustrated in Figures 10A—10E. In Figure 10A the insert text has starting text section 174, an SCG 176 for the Y set and an ending text section 178. The document text for receiving the insertion is shown in Figure 10B with the cursor at the location of the B character to indicate that the insert goes between the A and B characters. The document text comprises preceding text section 180 and following text section 182. Since the starting text of the insert is in the X character set and the preceding text of the document text is also in the X set there is no need to insert a character set change code between text sections 180 and 174. This is shown in Figure 10C. In Figure 10D the entire text section comprising elements 174, 176 and 178 is inserted in the document text stream. Referring to Figure 10E an SCG 180 is inserted between the ending text section 178 of the insert and the following text section 182 of the document in order to change from the Y character set to the X character set.

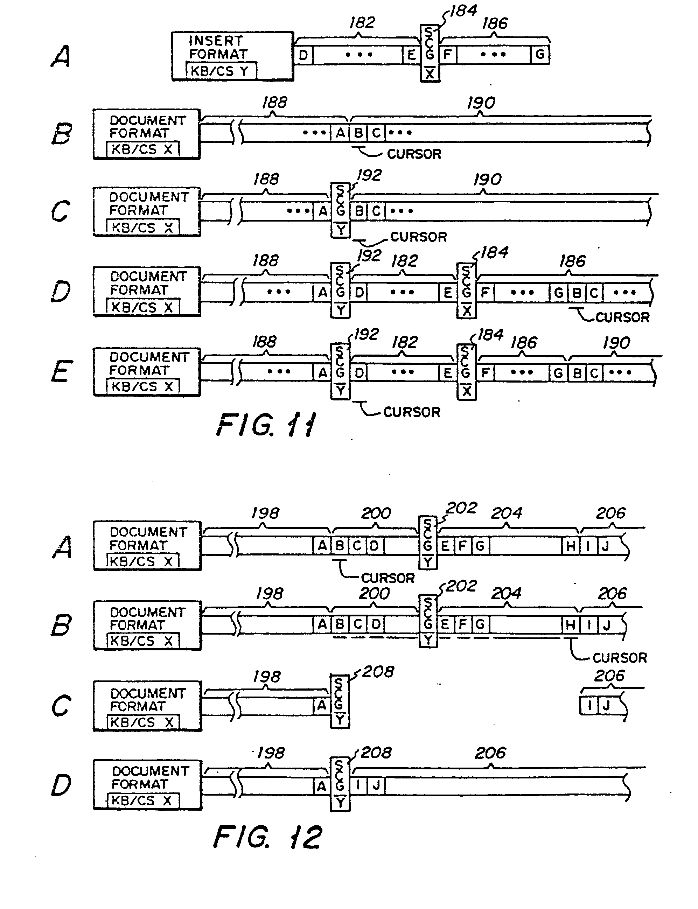

A still further example of the method of the present invention is shown in Figures 11A—11E. The insert comprises a starting text 182 which is in the Y character set. A character set change code 184 changes to the X character set for the ending text 186 of the insert. The document text as shown in Figure 8B has preceding section 188 and following section 190 with the cursor placed under the character B. In Figure 11C a character set change code 192 is inserted after the preceding text 188 to change from the X to the Y character set. In Figure 11D the insert elements 182, 184 and 186 are entered into the document text after the character set change code 192.

Referring to Figure 11E there is no need for an additional character set change code after the ending text 186 and before the following text 190, since both texts are in the X character set.

Referring now to Figure 12, there is illustrated an example of the method of Figure 6 for the deletion of a block of text from a text stream. The original document text stream is shown in Figure 12A and comprises text sections 198, 200, a character set change code 202 and text sections 204 and 206. The object of this example is to delete the text section 200 and 204. Note that there is a character set change code within the block of text to be deleted. Should this block of text merely be deleted without compensating for the character set change code in the text, section 206 would have the incorrect keyboard character set. The cursor is initially set to the character B. In Figure 12B the characters within the deletion block have been highlighted by operation of the cursor.

In Figure 12C the block sections 200 and 204 have been deleted along with the character code 202. The following text section 206 was examined prior to the deletion of blocks 200, 202 and 204 to determine its character set and if this should differ from the character for the preceding text section 109, character set change code 208 is inserted between these two sections. Since the following text section 206 is in the Y character set, the character code 208 must set the text stream to the Y character set. Referring now to Figure 12D the text section 206 is moved to be immediately adjacent to the text section 198 and character set change code 208.

In summary the present invention as claimed provides a method and apparatus for maintaining the correct keyboard character set in a multi-set environment on the introduction of a selected block of text.

Although several embodiments of the invention have been illustrated in the accompanying drawings and described in the foregoing detailed description, it will be understood that the invention is not limited to the embodiments disclosed but is capable of numerous rearrangements, modifications and substitutions without departing from the scope of the invention as claimed.

## Claims

1. Method of processing text in a text processing system using different keyboard character sets and comprising a display unit (22) for displaying a text stream to an operator, a keyboard means (14) for entering characters, a processor (10), and a memory means (20) including a text storage buffer (26) for storing the text data stream and control data, an active document format section (28) for storing the active document character set code and a cursor control section (32) for controlling a cursor on said display; said method of processing being characterized by the following combination of steps for introducing a selected block of text:

identifying, in response to the operator command positioning said cursor on said display, the selected block of text to be inserted into said text stream at a selected location,

fetching from said active document format section (28) the keyboard character set code for the text in said text stream immediately preceding said location, and from a character set storage means (64) the keyboard character set code identifying the character set of the block of text to be inserted,

comparing the keyboard character set code for the preceding text with the character set code ·of the selected block of text to be inserted,

altering in said text storage buffer (26) said text stream by inserting said selected block of selected text, and

inserting character set change codes in the altered text stream when the comparison indicates a character set mismatch.

2. The method of processing text for introducing a selected block of text at a selected location according to claim 1 further comprising the steps of:

fetching from said active document format section (28) the keyboard character for the text in said text stream immediately, following the selected location where said selected block of text has been inserted, and from said character set storage means (64) the keyboard character set code for the ending text of said block of text,

comparing the keyboard character set code for said following text and the keyboard character set code for said ending text, and

inserting a character set change code in said text stream between said ending text and said following text to indicate the keyboard character set for said following text when said ending text and said following text have different keyboard character set codes.

3. The method of processing text for introducing a selected block of text at a selected location according to claim 1 wherein said step of comparing produces a first output when said keyboard character set codes compare and a second output when said keyboard character set codes do not compare, and

in response to said second output, a character set change code is added immediately upstream of said location in said text stream to indicate the keyboard character set for said block of text, and a character set change code is added immediately downstream of said block of text in said text stream to indicate the keyboard character set for the text stream subsequent to said block of text.

4. The method of processing text according to claim 1, 2 or 3 in which the text stream is altered by deleting a block of text, said method comprising the steps of:

in response to an operator command, identifying a block of said text stream for deletion from said text stream,

determining the keyboard character set for the preceding text immediately before said block of text stream and for the following text immediately after said block of text stream,

deleting said block of text stream, and

inserting a character set change code after said preceding text and before said following text to indicate the keyboard character set of said following text if the keyboard character set of said following text differs from the keyboard character set for said preceding text.

5. The method of processing text according to claim 4 including the step of deleting all but the last of contiguous character set change codes in said text stream.

6. Text processing system for implementing the method according to any one of the preceding claims, including an active document format portion (28) for storing the active document character set code, and characterized in that it comprises, for inserting a block of text:

a character set storage means (64) for the keyboard character set code identifying the character set of said block of text to be inserted, and

a keystroke service routine section (44) for inserting character set change codes in the text stream between said preceding text and said following text to insure that the characters in the altered text stream are subject to the correct keyboard character sets.

**Patentansprüche**

1. Textverarbeitungsmethode in einem Textverarbeitungssystem mit verschiedenen Tastaturgruppen und mit einem Bildschirm (22) für die Anzeige eines Textabschnittes für den Bediener, Tastaturmitteln (14) für die Eingabe von Zeichen, einem Prozessor (10) und Speichermitteln (20) einschliesslich einem Textbufferspeicher (26) für die Speicherung des Textdatenabschnittes und der Steuerdaten, eine aktive Dokumentauswahlsektion (28) für die Speicherung des aktiven Dokumentzeichensatzcodes und eine Kursorsteuersektion (32) für die Steuerung eines Kursors auf dem besagten Bildschirm; besagte Verarbeitungsmethode durch folgende Kombination von Schritten für die Einführung eines ausgewählten Textblockes gekennzeichnet:

Identifizierung in Antwort auf den Bedienerbefehl, in dem der besagte Kursor auf dem besagten Bildschirm positioniert wird, des ausgewählten Textblockes, der in den besagten Textabschnitt an einer ausgewählten Stelle einzufügen ist,

Herausholen aus der besagten aktiven Dokumentformatsektion (28) des Schriftzeichensatzcodes für den Text im besagten Textabschnitt, der unmittelbar der besagten Stelle vorangeht, und aus einem Zeichensatzspeichermittel (64) Auswahl des Zeichensatzcodes, mit dem der Zeichensatz im einzufügenden Text identifiziert wird,

Vergleich des Zeichensatzcodes des vorangehenden Textes mit dem Zeichensatzcode des ausgewählten einzufügenden Textblocks,

Änderung in besagtem Textspeicherbuffer (26) des besagten Textblockes durch Einfügen des besagten ausgewählten Textblockes, und

Einführung der Zeichensatzänderungscodes in den geänderten Textabschnitt, wenn der Vergleich verschiedene Zeichensätze anzeigt.

2. Textverarbeitungsverfahren zum Einführen eines ausgewählten Textblockes an einer ausgewählten Stelle gemäss Anspruch 1, ferner folgende Schritte enthaltend:

Herausholen aus dem besagten aktiven Dokumentformatabschnitt (28) des Zeichens für den Text im besagten Textabschnitt, der unmittelbar auf die ausgewählte Stelle folgt, an der der ausgewählte Textblock eingefügt wurde, und aus dem besagten Zeichensatzspeichermittel (64) des Zeichensatzcodes zum Beenden des Textes des besagten Textblockes,

Vergleich des Zeichensatzcodes für den besagten folgenden Text und des Zeichensatzcodes für den besagten endenden Text, und

Einfügen eines Zeichensatzänderungscodes in den besagten Textabschnitt zwischen den besagten endenden Text und den besagten folgenden Text, um den Zeichensatz anzuzeigen, der für den besagten folgenden Text zu wählen ist, wenn der besagte endende und der besagte folgende Text verschiedene Zeichensatzcodes aufweisen.

3. Textverarbeitung zum Einschieben eines ausgewählten Textblockes an einer ausgewählten Stelle gemäss Anspruch 1, in der der besagte Vergleichsschritt eine erste Ausgabe erzeugt, wenn die besagten Zeichensatzcodes gleich sind, und eine zweite Zeichenausgabe, wenn die besagten Zeichensatzcodes nicht gleich sind, und

in Antwort auf die besagte zweite Ausgabe unmittelbar vor der besagten Stelle in besagtem Textabschnitt einen Zeichensatz-Änderungscode einsetzt, um den Zeichensatz für den besagten Textblock anzugeben und unmittelbar nach dem besagten Textblock in besagtem Textabschnitt einen Zeichensatzänderungscode einsetzt, um den Zeichensatzcode für den unmittelbar auf den besagten Textblock folgenden Textabschnitt anzugeben.

4. Textverarbeitungsverfahren gemäss Anspruch 1, 2 oder 3, in dem der Textstrom durch Löschung eines Textblockes geändert wird, wobei besagtes Verfahren folgende Schritte enthält:

in Antwort auf einen Bedienerbefehl Identifizierung eines Blockes des besagten Textabschnittes, der aus dem besagten Textabschnitt gelöscht werden soll; Ermittlung des Zeichensatzes für den unmittelbar vorangehenden Text vor dem besagten Textabschnitt und für den folgenden Text unmittelbar nach dem besagten Textabschnitt;

Löschung des besagten Textabschnittes, und

Einführung eines Zeichenänderungscodes nach dem besagten vorangehenden Text und vor dem besagten folgenden Text, um den Zeichensatz des besagten folgenden Textes anzugeben, wenn sich der Zeichensatz des besagten folgenden Textes von dem Zeichensatz für den besagten vorangehenden Text unterscheidet.

5. Textverarbeitungsverfahren gemäss Anspruch 4 einschliesslich des Schrittes, alle ausser dem letzten der aufeinanderfolgenden Zeichensatzwechselcodes in besagtem Textstrom zu löschen.

6. Textverarbeitungssystem für die Ausführung des Verfahrens gemäss einem der vorangehenden Ansprüche, einschliesslich eines aktiven Dokumentformatabschnittes (28) zum Speichern des aktiven Dokumentzeichensatzcodes, gekennzeichnet dadurch, dass es zum Einfügen eines Textblockes enthält:

Zeichensatzspeichermittel (64) für den Zeichensatzcode, die den Zeichensatz des besagten einzufügenden Textblocks identifizieren, und

eine tastaturbetätigte Dienstroutine (44) zum Einfügen von Zeichensatzänderungscodes in den Textstrom zwischen dem besagten vorangehenden Text und dem besagten folgenden Text, um sich zu vergewissern, dass die Zeichen im geänderten Textstrom den richtigen Tastaturzeichensätzen entsprechen.

**Revendications**

1. Méthode de traitement de texte dans un système de traitement de texte utilisant différents ensembles de caractères de clavier et comprenant une unité d'affichage (22) pour afficher un courant de texte pour un opérateur, un moyen à clavier (14) pour entrer des caractères, un processeur (10) et un moyen à mémoire (20) comprenant une mémoire intermédiaire d'emmagasinage de texte (26) pour emmagasiner le courant de données de texte et des données de commande, une section de format de documents actifs (28) pour emmagasiner le code de l'ensemble des caractères du document actif et une section de commande de curseur (32) pour commander un curseur sur ledit affichage, ladite méthode de traitement étant caractérisée par la combinaison suivante des étapes d'introduction d'un bloc de texte sélectionné:

l'identification en réponse à la commande de l'opérateur positionnant ledit curseur sur ledit affichage, du bloc de texte sélectionné à introduire dans ledit courant de texte dans un emplacement sélectionné,

l'extraction à partir de ladite section de format de documents actifs (28) du code d'ensemble des caractères du clavier pour le texte dans ledit courant de texte précédant immédiatement ledit emplacement, et à partir d'un moyen d'emmagasinage d'ensembles de caractères (64) du code d'ensemble des caractères du clavier identifiant l'ensemble de caractères du bloc de texte à introduire,

la comparaison du code d'ensemble des caractères du clavier pour le texte précédent avec le code d'ensemble de caractères du bloc de texte sélectionné à introduire,

la modification dans ladite mémoire intermédiaire d'emmagasinage de texte (26) dudit courant de texte en introduisant ledit bloc sélectionné de texte sélectionné, et

l'introduction des codes de changement d'ensemble de caractères dans le courant de texte modifié lorsque la comparaison indique une non correspondance des ensembles de caractères.

2. La méthode de traitement de texte pour introduire un bloc de texte sélectionné dans un emplacement sélectionné selon la revendication 1, comprenant en outre les étapes suivantes:

l'extraction depuis ladite section de format de documents actifs (28) du caractère de clavier pour le texte dans ledit courant de texte suivant immédiatement l'emplacement sélectionné où ledit bloc de texte sélectionné a été introduit, et depuis ledit moyen d'emmagasinage d'ensembles de caractères (64) du code d'ensemble de caractères du clavier pour le texte final dudit bloc de texte,

la comparaison du code d'ensemble de caractères de clavier pour ledit texte suivant et du code d'ensemble de caractères de clavier pour ledit texte final, et

l'introduction d'un code de changement d'ensemble de caractères dans ledit courant de texte entre ledit texte final et ledit texte suivant pour indiquer l'ensemble de caractères de clavier pour ledit texte suivant lorsque ledit texte final et ledit texte suivant ont des codes d'ensemble de caractères de clavier différents.

3. La méthode de traitement de texte pour introduire un bloc de texte sélectionné dans un emplacement sélectionné selon la revendication 1 dans laquelle ladite étape de comparaison produit une première sortie lorsque lesdits codes d'ensemble de caractères de clavier sont comparables et une seconde sortie lorsque lesdits codes d'ensemble de caractères de clavier ne sont pas comparables, et

en réponse à ladite seconde sortie, un code de changement d'ensemble de caractères est ajouté immédiatement en amont dudit emplacement dans ledit courant de texte pour indiquer l'ensemble de caractères de clavier pour ledit bloc de texte, et un code de changement d'ensemble de caractères est ajouté immédiatement en aval dudit bloc de texte dans ledit courant de texte pour indiquer l'ensemble de caractères de clavier pour le courant de texte suivant ledit bloc de texte.

4. La méthode de traitement de texte selon la revendication 1, 2 ou 3 dans laquelle le courant de texte est modifié par la suppression d'un bloc de texte, ladite méthode comprenant les étapes suivantes:

en réponse à une commande d'opérateur, l'identification d'un bloc dudit courant de texte pour suppression dudit courant de texte,

la détermination de l'ensemble de caractères de clavier pour le texte précédent immédiatement avant ledit bloc de courant de texte et pour le texte suivant immédiatement après ledit bloc de courant de texte,

la suppression dudit bloc de courant de texte, de l'introduction d'un code de changement d'ensemble de caractères après ledit texte précédent et avant ledit texte suivant pour indiquer à l'ensemble de caractères de clavier dudit texte suivant si l'ensemble de caractères de clavier dudit texte suivant est différent de l'ensemble de caractères de clavier pour ledit texte précédent.

5. La méthode de traitement de texte selon la revendication 4 comprenant l'étape de suppression de tous les codes de changement d'ensemble de caractères contigus à l'exception du dernier dans ledit courant de texte.

6. Système de traitement de texte pour mettre en oeuvre la méthode de l'une quelconque des revendications précédentes, comprenant une section de format de documents actifs (28) pour emmagasiner le code d'ensemble de caractères des documents actifs, et caractérisé en ce qu'il comprend pour l'introduction d'un bloc de texte:

un moyen d'emmagasinage d'ensembles de caractères (64) pour le code d'ensemble de caractères de clavier identifiant l'ensemble de caractères dudit bloc de texte à introduire, et

une section de routine de service d'actionnements de touches (44) pour introduire des codes de changement d'ensemble de caractères dans le courant de texte entre ledit texte précédent et ledit texte suivant pour s'assurer que les caractères dans le courant de texte modifié sont soumis aux ensembles de caractères de clavier corrects.

FIG. 1

0 052 711

FIG. 2

0 052 711

*FIG. 3*

A   INPUT KEYBOARD   KEYBOARD/CHARACTER SET Y

*14*

B   DOCUMENT FORMAT   KB/CS X

112 DOCUMENT TEXT   · · · A   B C · · ·   113 DOCUMENT TEXT

*114*   CURSOR

C   INPUT KEY DEPRESSED: Δ   INPUT KB/CS Y

D   DOCUMENT FORMAT   KB/CS X

112   · · · A   SCG Y   Δ   SCG X   B C · · ·   113

CURSOR

E   INPUT KEY DEPRESSED: D   INPUT KB/CS Y

F   DOCUMENT FORMAT   KB/CS X

112   · · · A   SCG Y   Δ D   SCG X   B C · · ·   113

CURSOR

G   INPUT KEYBOARD CHANGED TO Z   INPUT KB/CS Y → Z

H   DOCUMENT FORMAT   KB/CS X

112   · · · A   SCG Y   Δ D   SCG X   B C · · ·   113

CURSOR

I   INPUT KEY DEPRESSED: ¶   INPUT KB/CS Z

J   DOCUMENT FORMAT   KB/CS X

112   · · · A   SCG Y   Δ D   SCG Z   ¶   SCG X   B C   113

CURSOR

FIG. 4

4

FIG. 5

FIG. 6

# 0 052 711

**A** INSERT FORMAT | KB/CS Y | D ••• *140* INSERT BLOCK TEXT ••• E

**B** DOCUMENT FORMAT | KB/CS X | *142* ••• A | *144* B C ••• — CURSOR

**C** DOCUMENT FORMAT | KB/CS X | *142* ••• A | SCG Y *146* | *144* B C ••• — CURSOR

**D** DOCUMENT FORMAT | KB/CS X | *142* ••• A | SCG Y *146* | *140* D ••• ••• E | *144* B C ••• — CURSOR

**E** DOCUMENT FORMAT | KB/CS X | *142* ••• A | SCG Y *146* | *140* D ••• ••• E | SCG X *148* | *144* B C ••• — CURSOR

## FIG. 7

**A** INSERT FORMAT | KB/CS X | D ••• *154* ••• E

**B** DOCUMENT FORMAT | KB/CS X | *156* ••• A | *158* B C ••• — CURSOR

**C** DOCUMENT FORMAT | KB/CS X | *156* | *158* NO CHANGE ••• A B C ••• — CURSOR

**D** DOCUMENT FORMAT | KB/CS X | *156* ••• A D ••• | *154* ••• E B C ••• | *158* — CURSOR

**E** DOCUMENT FORMAT | KB/CS X | *156* ••• A D ••• | *154* NO CHANGE ••• E B C ••• | *158* — CURSOR

## FIG. 8

6

**FIG. 9**

A
INSERT FORMAT
KB/CS Y

160 INSERT TEXT KB/CS Y

164

162 INSERT TEXT KB/CS Z

D ··· ··· E | S C G Z | F ··· ··· G

B
DOCUMENT FORMAT
KB/CS X

166

168

··· A B C ···
CURSOR

C
DOCUMENT FORMAT
KB/CS X

166

170

168

··· A | S C G Y | B C ···
CURSOR

D
DOCUMENT FORMAT
KB/CS X

166

170  160

164  162

168

··· A | S C G Y | D ····· E | S C G Z | F ··· G B C ···
CURSOR

E
DOCUMENT FORMAT
KB/CS X

166

170  160

164  162

172  168

· ··· A | S C G Y | D ··· E | S C G Z | F ··· G | S C G X | B C ···
CURSOR

**FIG. 9**

**FIG. 10**

A
INSERT FORMAT
KB/CS X

174

176

178

D ··· E | S C G Y | F ··· G

B
DOCUMENT FORMAT
KB/CS X

180

182

··· A B C ···
CURSOR

C
DOCUMENT FORMAT
KB/CS X

180

182

NO CHANGE
··· A B C ···
CURSOR

D
DOCUMENT FORMAT
KB/CS X

180  174

176  178

182

··· A D ··· E | S C G Y | F ··· G B C ···
CURSOR

E
DOCUMENT FORMAT
KB/CS X

180  174

176  178

180  182

··· A D ··· E | S C G Y | F ··· G | S C G X | B C ···
CURSOR

**FIG. 10**

FIG. 11

FIG. 12